Europäisches Patentamt

European Patent Office

Office européen des brevets

(19)

(11) Veröffentlichungsnummer: **0 226 032 B1**

(12) **EUROPÄISCHE PATENTSCHRIFT**

(45) Veröffentlichungstag der Patentschrift: **13.02.91**

(51) Int. Cl.⁵: **B01J 3/04**

(21) Anmeldenummer: **86115558.8**

(22) Anmeldetag: **10.11.86**

(54) **Autoklav, insbesondere zur Durchführung von chemischen Reaktionen.**

(30) Priorität: **11.11.85 HU 428885**

(43) Veröffentlichungstag der Anmeldung:
**24.06.87 Patentblatt 87/26**

(45) Bekanntmachung des Hinweises auf die
Patenterteilung:
**13.02.91 Patentblatt 91/07**

(84) Benannte Vertragsstaaten:
**DE FR GB IT**

(56) Entgegenhaltungen:
**DE-A- 1 667 280**
**DE-A- 2 708 085**
**FR-A- 2 189 355**
**US-A- 3 425 582**

(73) Patentinhaber: **CHINOIN Gyogyszer és Vegyészeti Termékek Gyára RT.
Ujpest, To utca 1-5
H-1045 Budapest IV(HU)**

(72) Erfinder: **Kapocs, Ferenc
Petöfi u. 41
H-1225 Budapest(HU)**
Erfinder: **Kátay, Gábor
Kaktusz u. 30
H-2030 Erd(HU)**
Erfinder: **Maroti, László
Frankel L. u. 10
H-1027 Budapest(HU)**
Erfinder: **Nagy, Lajos
Vásárhelyi K. u. 16
H-2000 Szentendre(HU)**
Erfinder: **Szász, Péter
Thököly u. 14
H-2030 Erd(HU)**
Erfinder: **Vidra, Lászlo
Budaj L. u. 5/c.
H-1024 Budapest(HU)**

(74) Vertreter: **Hansen, Bernd, Dr.rer.nat. et al
Hoffmann, Eitle & Partner Patentanwälte Arabellastrasse 4 Postfach 81 04 20
D-8000 München 81(DE)**

## Beschreibung

Die Erfindung betrifft ein Druckgefäß zum Durchführen chemischer Reaktionen nach dem Gattungsbegriff des Patentanspruchs 1, wie es beispielsweise aus der FR-PS 21 89 355 bekannt ist. Bei diesem bekannten Druckgefäß ist eine Innenauskleidung des Bodenelements, des Deckelelements und des mindestens einen Mantelelements vorhanden, die aus Nickel besteht. Bei bestimmten, in dem Druckgefäß ablaufenden chemischen Verfahren, kommt es aber sehr wesentlich darauf an, daß keine Metallverunreinigungen aus der Metallauskleidung in das eventuell aggressiv wirkende Produkt gelangen, da durch solche, auch nur spurenweise Verunreinigungen durch Metall das Produkt (z.B. organische Peroxide) zersetzt werden kann.

Als Auskleidung für Druckgefäße, in denen chemische Reaktionen ablaufen, ist die Verwendung von Emaille weitgehend bekannt. Eigentümlich für diese Auskleidungen ist es jedoch, daß in Fällen hohen Innendrucks im Druckgefäß, wie er im Laufe chemischer Verfahrensabläufe auftreten kann, die Wände des Druckgefäßes zu Ausbauchungen neigen, die zwar im elastischen Bereich liegen können, die aber dennoch bei der Verformung der Wände zu einer Zerstörung der glasharten Emaille-Schicht führen können.

Die Aufgabe, die bei dem beanspruchten Druckgefäß gelöst werden soll, besteht demnach darin, das gattungsgemäße Druckgefäß so weiterzubilden, daß es sowohl für metall-empfindliche Produkte als auch für sehr hohe Verfahrensdrücke geeignet ist und daher eine hohe Lebensdauer hat.

Diese Aufgabe wird durch die Gesamtheit der im Kennzeichnungsteil des Patentanspruchs enthaltenen Merkmale gelöst. Dabei wird zwar von der zum Stand der Technik gehörenden Praxis Gebrauch gemacht, die Gefäßauskleidung aus Emaille herzustellen; durch die weiteren Merkmale wird aber gleichzeitig sichergestellt, daß Gefäß-Verformungen über ein zulässiges Maß hinaus auch bei hohen Drücken weitgehend vermieden werden.

Gleichzeitig wird durch die mehrteilige Bauart, die als solche durch die gattungsbildende FR-PS 21 89 355 bekannt ist, sichergestellt, daß bei Beschädigungen der empfindlichen Emaille-Auskleidung, wie sie z.B. durch in den Druckbehälter fallende Fremdgegenstände auftreten können, nicht jeweils der gesamte Druckbehälter, sondern nur das betreffende Deckel-, Boden- oder Mantelelement ausgetauscht werden muß.

Im einzelnen erlauben die Flansche, die sowohl an den Boden- und Deckel-, als auch an den Mantelelementen fest angeschweißt sind, im Gegensatz zu den aufgeschraubten Flanschen gemäß der gattungsbildenden Druckschrift keinerlei radiales Spiel zwischen Behälterteil und Flansch, das auch bei kleinsten Toleranzen bereits zu einer Zerstörung der Emailleschicht beitragen könnte. Ferner ist durch die Verschraubung der Flansche gegeneinander durch die in den Merkmalen d) und e) des Patentanspruchs enthaltene Mittel sichergestellt, daß die Flansche völlig gleichmäßig aufeinandergepreßt werden, daß sich diese Flansche also nicht in ihrer Ebene wellenförmig zwischen den üblicherweise vorhandenen Schraublöchern verformen können und sich auf diese Weise an den Stellen der Schraublöcher stärker an die Dichtungen und damit an den Gegenflansch anlegen als zwischen den Schraublöchern. Diese Tendenz wird bei einer üblichen Flanschausführung mit Schraublöchern noch durch die Schwächung der Flansche eben durch die Schraublöcher verstärkt. Eine solche wellenförmige Verformung könnte aber wiederum zu Spannungen in den jeweiligen Behälterenden und damit zu einer Gefahr des Reißens der Emaille-Schicht führen. Auf diese Weise trägt die lochlose Ausführung der Flansche mit rundherum verlaufenden Nuten und die Ausbildung der entsprechenden Spannelemente gemäß dem Patentanspruch 1 zur lösung der gestellten Aufgabe bei.

Durch die im Patentanspruch 2 beanspruchte Ausbildung der Außenfläche des wenigstens einen Mantelelementes wird eine weitere Erhöhung der Wandsteifigkeit dieses Elements erreicht und gleichzeitig die Möglichkeit geschaffen, in dem zwischen Deckplatte und Mantelelement liegenden Raum ein aufzuheizendes Medium durchzuleiten.

Die Flansche 11 an den Mantelelementen 2, 3 können auch so ausgebildet sein, daß sie eine doppelte Dicke haben, so daß sie auf diese Weise noch besser als ein Flansch normaler Dicke, beispielsweise während der Wärmebelastung des Emailliervorganges oder auch im Betrieb des Druckgefäßes zur notwendigen Formstabilität des Mantelelemtentes beitragen können.

Einzelheiten des erfindungsgemäßen Druckgefäßes werden nun anhand eines in den beiliegenden Zeichnungen dargestellten Ausführungsbeispiels näher beschrieben.

Es zeigen:

Fig. 1    die Gesamtansicht eines Druckgefäßes nach der Erfindung;

Fig. 2    eine Befestigungsart des Deckel- und des Mantelelements beim Druckgefäß nach der Ersindung sowie die Versteifung des Mantelelements, und

Fig. 3    eine andere Befestigungsart des Deckel- und des Mantelelementes nach der Erfindung.

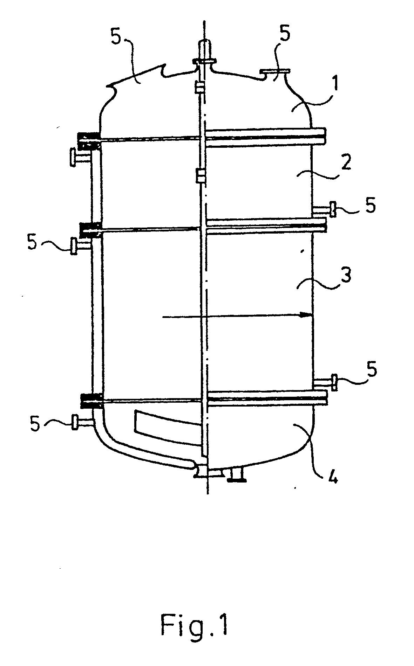

Die in Fig. 1 dargestellte Ausführungsform des erfindungsgemäßen Druckgefäßes besteht aus einem Deckelelement 1, einem ersten Mantelelement 2, einem weiteren Mantelelement 3 und dem Bodenelement 4. Das Deckelelement ist an dem ersten Mantelelement 2, das erste Mantelelement 2 an dem weiteren Mantelelement 3 und das weitere Mantelelement 3 an dem Bodenelement 4 befestigt. An dem Deckelelement 1, an dem ersten Mantelelement 2, an dem weiteren Mantelelement 3 und an dem Bodenelement 4 sind Anschlußstutzen ausgebildet, die zum Füllen und Entleeren des Druckgefäßes sowie zur Entnahme von Proben aus dem Druckgefäß dienen können.

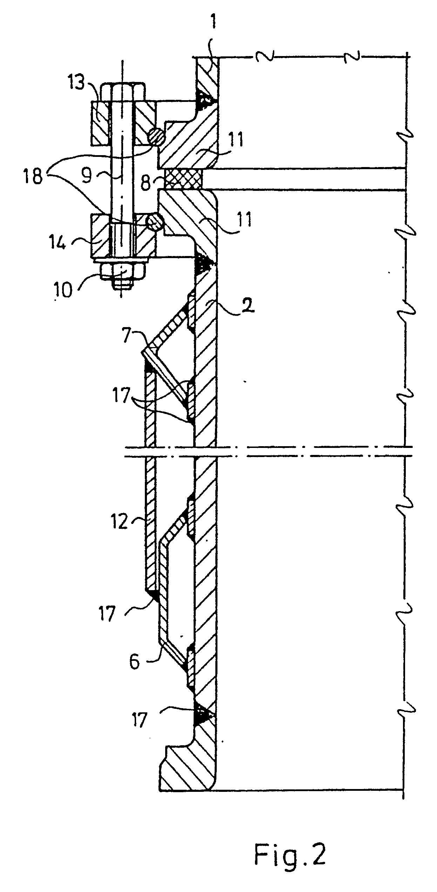

Gemäß Fig. 2 erfolgt die Befestigung des Deckelelementes an dem ersten Mantelelement mit Hilfe von an den Elementen mit Schweißnähten 17 befestigten Flanschen 11, zwischen welchen eine Dichtung 8 vorgesehen ist. An den Flanschen 11 sind mittels Druckringen 18 ein oberer Klemmring 13 und ein unterer Klemmring 14 angeordnet. Diese Klemmringe sind mit Bolzen 9 und Muttern 10 aneinander befestigt. Das Mantelelement 2 ist mit einer an einem flachen Hebelgürtel 6 und einem konischen Hebelgürtel 7 aufgeschweißten Deckplatte 12 versehen, die zusammen mit der Wand des Mantelelementes 2 bzw. 3 einen geschlossenen Raum bildet, der - beispielsweise zum Zwecke der Kühlung oder Heizung - zur Zufuhr eines gegenüber dem Innenraum des Druckgefäßes abgegrenzten Mediums zur Außenfläche des Mantelelementes 2 bzw. 3 dienen kann und der zusammen mit den Hebelgürteln 6 und 7 gleichzeitig zur Versteifung der Wand des jeweiligen Mantelelementes dient.

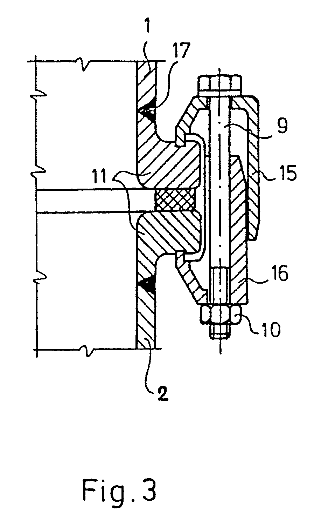

Bei der Befestigung gemäß Fig. 3 sind die Flansche 11 jeweils durch eine in einer Nut angeordnete ober und untere Klammer 15 und l6 über Bolzen 9 und Muttern 10 aneinander befestigt.

Die Mantelelemente 2,3 des Autoklaven können auch technisch derart aufgebaut sein, daß ein doppelter Flansch 11 verwendet wird, welcher dem Mantelelement 2,3 beispielsweise während der durch Emaillierung auftretende Wärmebelastung oder anderen Inanspruchnahmen eine entsprechende Stabilität verleiht.

## Ansprüche

1. Druckgefäß zum Durchführen chemischer Reaktionen mit
   - einem Deckelelement mit Anschlußflansch und
   - einem Bodenelement mit Anschlußflansch,
   - wobei zwischen den beiden Elementen mindestens ein Mantelelement austauschbar angeordnet und über Dichtungen jeweils an das benachbarte Element angeschlossen ist, und

   - wobei alle Elemente mit einem inneren Schutzbezug versehen sind, dadurch **gekennzeichnet**, daß
   a) der innere Schutzbezug aus Email besteht,
   b) auch am Mantelelement Flansche vorhanden sind,
   c) die Flansche an Deckel-, Boden- und Mantelelementen angeschweißt sind,
   d) alle Flansche mit rundherum verlaufenden Nuten für die Elemente verbindende Kraft-Übertragungsmittel (9, 10, 13, 14, 18 bzw. 9, 10, 15, 16) ausgestattet sind, und
   e) in den Nuten Druckringe (18) liegen, die ihrerseits durch verschraubte Klemmringe (13/14) axial verspannt sind bzw. daß in die Nuten obere (15) und untere (16), miteinander verschraubbare Klammern eingreifen.

2. Vorrichtung nach Anspruch 1, dadurch **gekennzeichnet**, daß an der Außenfläche des wenigstens einen Mantelelementes (2 bzw. 3) ein flacher Hebegürtel (6), ein konischer Hebegürtel (7) und ein diese zwei Gürtel abdeckendes Deckelement (12) angeschweißt sind, welche einen geschlossenen Raum bilden.

## Claims

1. A pressure vessel for carrying out chemical reactions, with
   - a cover element with a connecting flange and
   - a bottom element with a connecting flange,
   - wherein at least one casing element is exchangeably arranged between the two elements and is joined to the respective adjacent element by way of seals, and
   - wherein all the elements are provided with an internal protective coating, characterised in that
   a) the internal protective coating consists of enamel,
   b) flanges are also present on the casing element,
   c) the flanges are welded to the cover, bottom and casing elements,
   d) all the flanges are equipped with circumferentially extending grooves for force-transmitting means (9, 10, 13, 14, 18 or 9, 10, 15, 16) that connect the elements, and
   e) thrust rings (18) are laid in the grooves and are axially braced by screwed clamping rings (13/14), or in that upper (15) and lower (16) clamps which can be screwed together project into the grooves.

2. ,. Apparatus according to claim 1, characterised in that a flat supporting girdle (6), a conical supporting girdle (7) and a lid element (12) covering these two girdles are welded to the outer surface of said at least one casing element (2 or 3) so as to form a closed space.

**Revendications**

1. Autoclave permettant de réaliser des réactions chimiques, comportant:
   - un élément de couvercle pourvu d'une bride de raccordement et un élément de fond pourvu d'une bride de raccordement;
   - entre ces deux éléments, de manière interchangeable, au moins un élément d'enveloppe qui est relié à l'élément voisin avec interposition de joints d'étanchéité;
   - tous ces éléments étant munis d'un revêtement intérieur, caractérisé en ce que:
   a) le revêtement intérieur est formé d'émail;
   b) l'élément d'enveloppe comporte également des brides;
   c) les brides sont soudées sur les éléments de couvercle, de fond et d'enveloppe;
   d) toutes les brides comportent des rainures annulaires pour des moyens de transmission de forces (9, 10, 13, 14, 18; ou 9, 10, 15, 16) qui relient les éléments entre eux;
   e) et en ce que des bagues de pression (18) disposées dans les rainures sont sollicitées axialement par des bagues de serrage (13/14) vissées, ou en ce que des pinces inférieure (16) et supérieure (15) reliées par vissage s'engagent dans les rainures.

2. Dispositif selon la revendication 1, caractérisé en ce qu'une ceinture plate (6), une ceinture conique (7) et un manchon de recouvrement (12) qui recouvre ces deux cercles sont soudés sur la surface extérieure de l'élément d'enveloppe (2, 3) de manière à délimiter un espace fermé.

Fig.1

Fig.2

Fig.3